# EUROPÄISCHE PATENTSCHRIFT

(11) **EP 4 034 319 B1**
(45) Veröffentlichungstag und Bekanntmachung des Hinweises auf die Patenterteilung: **24.04.2024**
(21) Anmeldenummer: 20775654.5
(22) Anmeldetag: 25.09.2020
(51) Int. Cl.: B22D 11/128, B22D 11/20, G01S 13/87, G01P 13/00, B65G 43/02

(54) **VORRICHTUNG UND VERFAHREN ZUM ERKENNEN VON EINER BEWEGUNG EINES KÖRPERS IN EINER INDUSTRIEANLAGE**
DEVICE AND METHOD FOR DETECTING A MOVEMENT OF A BODY IN AN INDUSTRIAL INSTALLATION
DISPOSITIF ET PROCÉDÉ DE DÉTECTION D'UN MOUVEMENT D'UN CORPS DANS UNE INSTALLATION INDUSTRIELLE

(30) Priorität: 27.09.2019 EP 19199999
(43) Veröffentlichungstag der Anmeldung: 03.08.2022
(73) Patentinhaber: Primetals Technologies Austria GmbH, 4031 Linz (AT)
(72) Erfinder: ROHRHOFER, Andreas, 4070 Eferding (AT); HARTL, Franz, 4720 Kallham (AT); FISCHER, Paul, 4048 Puchenau (AT); MAYRHOFER, Anna, 4722 Peuerbach (AT); VOGLMAYR, Bernhard, 4060 Leonding (AT)
(74) Vertreter: Metals@Linz
(86) Internationale Anmeldenummer: PCT/EP2020/076895
(87) Internationale Veröffentlichungsnummer: WO 2021/058739

(56) Entgegenhaltungen:
- EP-A1- 1 130 485
- WO-A1-2017/020080
- WO-A1-2019/089661
- WO-A2-2016/135642
- AU-A4- 2017 100 493
- GB-A- 2 325 918
- JP-A- S56 168 946
- KR-A- 20010 061 642
- US-A- 3 509 751
- US-A1- 2013 333 473
- US-A1- 2016 197 408

## Beschreibung

### Gebiet der Technik

Die vorliegende Erfindung betrifft das Gebiet von Anlagen mit beweglichen Körpern.

Einerseits betrifft die Erfindung eine Vorrichtung und ein Verfahren zur Überwachung einer Anlage, bevorzugt eine Industrieanlage, wobei zumindest fünf Körper, bevorzugt zumindest zwanzig Körper, welche mit der Anlage verbunden sind, eine vorgegebene Rotationsbewegung oder eine vorgegebene translatorische Bewegung, besonders bevorzugt eine periodische Rotationsbewegung oder periodische translatorische Bewegung, ausführen.

Andererseits betrifft die Erfindung die Verwendung der Vorrichtung.

Des Weiteren umfasst die Erfindung auch ein Computerprogramm welches das Verfahren zur Überwachung von Anlagen ausführt.

### Stand der Technik

In Produktionsanlagen sind viele bewegliche Körper vorhanden, wobei nicht alle Bewegungen permanent überwacht werden. Es besteht bei manchen Anwendungen das Problem, dass eine Vielzahl von beweglichen Körpern vorhanden sind. Es ist aus Kostengründen oft nicht rentabel, alle diese beweglichen Körper ständig zu überwachen. Die beweglichen Körper werden oft nur sporadisch überprüft oder andere Hinweise - wie beispielsweise ein erhöhter Lärmpegel - deuten auf eine Fehlfunktion hin. Ein Beispiel, in welchem solche beweglichen Körper zu einer Vielzahl vorhanden sind, ist ein sogenanntes Förderband mit einem Fördergurt, welcher entlang einer Förderstrecke von Tragrollen gestützt wird. Es besteht nun das Problem, dass sichergestellt werden muss, dass sich diese Tragrollen während des Betriebes synchron zur Bandgeschwindigkeit drehen. Die Beförderung von Materialien aller Art und die langen Betriebszeiten dieser Förderbänder führen jedoch zu einem Verschleiß der Lager, welcher eine Rotationsbewegung der Tragrollen beeinträchtigen kann. Feststeckende oder schwergängige Tragrollen führen zu einer Relativbewegung zwischen Fördergurt und Rollen, was zu erhöhtem Verschleiß sowohl an den Rollen als auch am Fördergurt führt. Feststeckende oder schwergängige Tragrollen sind keine Seltenheit und können speziell bei langen Förderstrecken - wenn nicht rechtzeitig erkannt - zu ungeplanten Stillständen und weiters zu Produktionsausfällen führen. Eine manuelle Sichtinspektion der Fördereinrichtungen gestaltet sich sehr schwierig, da aus Sicherheitsgründen ein Großteil der Fördereinrichtungen geschlossen ausgeführt sind. Die geschlossene Ausführung verhindert den Blick auf die Tragrollen in vielen Fällen. Da Förderstrecken in der Regel sehr lange sind, stellt die manuelle Inspektion eine sehr zeitintensive Arbeit dar.

Eine Überwachung mit gängigen Sensoren - wie beispielsweise Drehzahlsensoren - ist nur über den Einsatz von übermäßig viel Hardware möglich, wodurch hohe Hardwarekosten und zusätzliche intensive Wartung entstehen. Dies wird in der Praxis selten angewendet, da vor allem eine Verkabelung der Hardware sehr aufwändig ist.

Eine mögliche visuelle Inspektion ist oftmals sehr schwierig, da Förderbänder aus Sicherheitsgründen und der Staubentwicklung vollkommen eingehaust sind. Drehende Tragrollen sind dadurch nicht mehr von außen einsehbar.

Die AU 201700493A4 offenbart eine Rolle, welche einen Informationsgenerator zum Sammeln von Informationen über die Rolle. Dies ermöglicht das Überwachen einer Vielzahl solcher Rollen eines Fördersystems.

Die GB2325918 offenbart ein Überwachungssystem bei dem eine Antenne und ein Transponder die Drehung eines Körpers erfassen, wobei die Antenne fest ist und der Transponder rotiert. Für jeden Rollkörper ist eine Antenne und ein Transponder vorgesehen.

### Zusammenfassung der Erfindung

Die Aufgabe der vorliegenden Erfindung liegt darin eine einfache und kostengünstige Möglichkeit der Überwachung von Bewegungen von einer Vielzahl von Anlagenteilen - welche eine vorgegebene Bewegung ausführen - zur Verfügung zu stellen.

Die Aufgabe wird durch die eingangs genannte Vorrichtung gelöst. Die Anlage weist zumindest fünf Körper auf, bevorzugt zumindest zwanzig Körper, welche eine vorgegebene Rotationsbewegung und/oder translatorische Bewegung ausführen. Diese Vorrichtung umfasst eine Kabelantenne und jeder der fünf Körper weist einen passiven Transponder, bevorzugt RFID Transponder, auf. Der passive Transponder hat keine eigene Energieversorgung, diese erfolgt ausschließlich durch ein elektromagnetisches Feld, welches durch die Kabelantenne ausgesendet wird. Die Kabelantenne ist so ausgeführt, dass diese den Transponder detektieren kann. Der Transponder ist derart am jeweiligen Körper angebracht, dass während der Drehbewegung und/oder translatorischen Bewegung des Körpers sich eine Position von Transponder und Kabelantenne zueinander verändert, bevorzugt treten während der Bewegung Bereiche auf in welchen die Kabelantenne ein Signal vom Transponder empfängt und Bereiche in welchen die Kabelantenne kein Signal vom Transponder erhält. Eine Kabelantenne ist beispielsweise ein Coax-Antennenkabel, welches als Antenne verwendet wird. Solche Kabelantennen sind beispielsweise als Wanderwellen RFID-Antennen bekannt. Der Lesebereich einer solchen Wanderwellen RFID Antenne reicht beispielsweise von einigen cm bis zu 2 m. Ein Feld zur Erfassung der passiven Transponder bildet sich kreisförmig entlang des Antennen Kabels aus. Die zu überwachenden Körper einer Industrieanlage sind meistens in einem bestimmten Abstand zueinander angeordnet. Damit nicht jeder Körper mit einer eigenen Antenne ausgestattet werden muss, hat es sich als sehr zielführend herausgestellt - um die Bewegung mithilfe eines empfangenen Transpondersignals detektieren zu können - eine Kabelantenne zu verwenden, um mit einer Antenne sämtliche - also zumindest alle fünf - passiven Transponder auszulesen. Solche Kabelantennen können mit einer Länge von bis zu 25 m ausgeführt werden. Es bildet sich ein zylindrisches Feld - mit bis zu 2m Radius - um die Antenne aus, mit welchem die einzelnen Transponder ausgelesen werden können. Eine Auswerteeinrichtung ermittelt aufgrund vom Transpondersignal, welches von der Kabelantenne empfangen wird, die Bewegung der Körper.

Die Auswerteeinrichtung ermittelt die tatsächliche translatorische Bewegung oder die tatsächliche Rotationsbewegung der zumindest fünf Körpers, anhand von durch die eine Kabelantenne empfangenen Transpondersignalen, fortlaufend. Die Auswerteeinrichtung erkennt fortlaufend für alle fünf Körper eine Abweichung von einer Rotationsbewegung oder translatorischen Bewegung zu der vorgegebenen Rotationsbewegung oder translatorischen Bewegung, sobald diese auftritt. Unter fortlaufend wird verstanden, dass die Abweichung bei mehreren Vorgängen pro Sekunde zumindest innerhalb weniger Sekunden erkannt werden kann und wenn diese Bewegung einmal pro Minute stattfindet, dann erfolgt die Erkennung innerhalb dieser Minute. Wie schnell die Abweichung erkannt werden muss hängt vor allem davon ab, wie kritisch die Abweichung der Bewegung des Körpers von der vorgegebenen Bewegung für die Anlage ist. Wenn der bewegliche Körper ein Anlagenteil mit direkter Auswirkung auf die Produktqualität ist, soll die Abweichung unmittelbar erfolgen. Wenn die Abweichung nicht unmittelbar kritisch für eine Produktqualität ist, sondern nur ein erhöhter Energieverbrauch oder ein erhöhter Materialverschleiß verursacht wird, so ist ein längerer Zeitraum möglich. Bei kritischen und langsamen Bewegungen soll innerhalb einer Bewegung die Abweichung erkannt werden. Wenn es sich um eine schnelle Bewegung - also mehrere Bewegungen pro Sekunde handelt - die Bewegungsabweichung sich nicht unmittelbar auf die Produktqualität auswirkt - reicht es aus, wenn dies beispielsweise nach fünf bis zehn Bewegungsabweichungen von der Auswerteeinrichtung erkannt wird. Die Abweichung der Rotationsbewegung oder der translatorischen Bewegung von der vorgegebenen Rotationsbewegung oder der vorgegebenen translatorischen Bewegung soll also in einem vorgegebenen Zeitfenster erkannt werden. Das Zeitfenster wird so gewählt, dass ein Schaden der Anlage und/oder eine verschlechterte Qualität des durch die Anlage erzeugten Produktes vermieden wird. Das Zeitfenster kann auch so gewählt werden, dass ein durch die Abweichung der Bewegung verursachter erhöhter Energiebedarf oder erhöhter Verschleiß vermieden wird. Die Kabelantenne muss derart angeordnet sein, dass jeder der zumindest fünf Transponder von der Kabelantenne - zumindest an einer Position - erfasst werden kann und die Auswerteeinrichtung, den jeweiligen Transponder eindeutig identifizieren kann. Die Kabelantenne ist ortsfest angebracht. Die Relativbewegung zwischen Transponder und Kabelantenne führt dazu, dass sich die von der Kabelantenne empfangenen Signale verändern. Im Zusammenhang mit dieser Erfindung wird unter der Veränderung der Position - von Transponder und Antenne zueinander - verstanden, dass zumindest ein Teilbereich des Transponders eine Positionsänderung gegenüber der Antenne ausführt. Das Signal muss sich also so verändern, dass anhand des veränderten Parameters auf eine Positionsänderung geschlossen werden kann. Mit beweglichem Körper werden - im Zusammenhang mit dieser Erfindung - alle Anlagenteile, Maschinenteile oder sonstige Objekte verstanden, welche eine Bewegung ausführen. Ein solcher beweglicher Körper kann beispielsweise ein rotationssymmetrischer Körper, welcher eine Rotationsbewegung ausführt oder ein Körper, welcher lineare Bewegungen ausführt, sein. Die Bewegung - die Rotationsbewegung oder translatorische Bewegung ist bevorzugt eine wiederkehrende Bewegung - der Körper erreicht immer wieder dieselbe Position. Besonders bevorzugt handelt es sich bei der Bewegung um eine periodische Bewegung - also eine Bewegung, die sich in regelmäßigen Abständen wiederholt. Der Transponder wird an einer Stelle angebracht, die sich einerseits während der Bewegung des Körpers verändert und andererseits soll der Transponder an dieser Stelle vor Zerstörung geschützt sein. Der Schutz des Transponders oder der Kabelantenne kann beispielsweise durch eine Vertiefung sichergestellt werden. Die Auswerteeinrichtung kann aufgrund der Signale, welche von der Kabelantenne empfangen werden, die Bewegungen der Körper detektieren.

Im Zusammenhang mit der Erfindung wird unter Detektieren der Bewegung allgemein verstanden, ob sich der Körper bewegt oder ob der Körper sich nicht - wie vorgesehen - bewegt. Dies kann sein, dass er gewisse Endlagen nicht erreicht oder diese Endlage erst nach einer längeren Zeit erreicht oder in seiner ursprünglichen Position verharrt. In einer bevorzugten Lösung können mehrere charakteristische Merkmale der Bewegung detektiert werden, besonders bevorzugt kann die Bewegung nahezu vollständig erfasst werden. Die Vorrichtung wird beispielsweise in metallurgischen Anlagen, bevorzugt für Stranggussanlagen oder Förderbänder, eingesetzt.

In einer bevorzugten Ausführungsform ist der Körper ein Rotationskörper. Der Transponder ist exzentrisch an einer Stirnseite des Rotationskörpers oder umfangsseitig am Rotationskörper angebracht. Der Rotationskörper führt eine Rotationsbewegung um die Rotationsachse aus. Der Transponder sind also exzentrisch gegenüber der Rotationsachse angeordnet. Diese Anordnung stellt sicher, dass bei Bewegung des Körpers zwischen Transponder und Antenne eine Relativbewegung stattfindet. Die Auswerteeinrichtung kann dadurch eine Bewegung detektieren. Das Anbringen des Transponders an der Stirnseite hat den Vorteil das dieser - in Ausführungsformen, bei welchen die Stirnseite nicht im Eingriff mit anderen Körpern ist - ausreichend vor Zerstörung geschützt ist. Beim Anbringen an der Umfangsseite ist der Transponder an einer Stelle, an der ebenfalls keine Berührung mit einem anderen Körper besteht oder in einer Vertiefung, angeordnet. Es sind aber auch andere Maßnahme denkbar, welche geeignet sind den Transponder entsprechend zu schützen.

Eine vorteilhafte Ausführung sieht vor, dass der Transponder derart am Körper positioniert ist, dass während der Bewegung des Körpers das von der Antenne empfangene Signal sich in seiner Signalstärke verändert und / oder es treten während der Bewegung des Körpers Positionen auf in welchen kein Signal empfangen wird. Durch die Betrachtung der Signalstärke kann sehr zuverlässig auf die Bewegung geschlossen werden. Bei Körpern für welche hauptsächlich das Vorhandensein irgendeiner Bewegung wichtig ist, hat sich auch die Methode Signal vorhanden und Signal nicht vorhanden als praktikabel erwiesen. Hierbei ist aber wichtig, dass während der Bewegung des Körpers immer jeweils eine Position auftritt, in welcher kein Signal empfangen wird und eine in welcher ein Signal empfangen wird.

Eine bevorzugte Ausführungsform sieht vor, dass die zumindest fünf Körper zueinander einen bestimmten Abstand aufweisen, wobei jene Körper mit dem größten Abstand zueinander zumindest einen Abstand von 5m, besonders bevorzugt 20m, aufweisen und die Kabelantenne ein Länge von zumindest 5m, besonders bevorzugt zumindest 20m aufweist. Die Kabelantenne ermöglicht es, bei entsprechender Verlegung auch über größere Abstände von den einzelnen Körpern ein zuverlässiges Detektieren der Bewegung der einzelnen Körper. Es ist nicht notwendig mehrere Antennen anzuordnen, um dies zu gewährleisten.

Eine vorteilhafte Ausführungsform sieht vor, dass durch die Auswerteeinrichtung zumindest ein charakteristischer Parameter der Bewegung, bevorzugt eine Geschwindigkeit, ein Erreichen einer Endposition und/oder eine Drehzahl, bestimmt werden kann. Die Auswerteeinrichtung ist so ausgestaltet, dass sie aufgrund des empfangenen Signals einen Rückschluss auf die Bewegung des Körpers machen kann. Dies kann beispielsweise dann der Fall sein, wenn es während der Bewegung Phasen gibt, in denen ein Transpondersignal empfangen wird und Phasen, in welchen keine Signal vom Transponder empfangen wird. Diese Information lässt einen Rückschluss auf eine Drehzahl zu - falls die Bewegung eine Rotationsbewegung ist. Dies kann auch bei Körpern, welche Linearbewegungen ausführen, in ähnlicher Weise erfolgen. Es ist auch denkbar, dass der Rückschluss auf einen Parameter der Bewegung aufgrund der Signalstärke erfolgt.

Eine zweckmäßige Ausführung sieht vor, dass die Antenne von einem nichtmetallischen Schlauch umhüllt wird. Dies hat den Vorteil, dass die Antenne einen Schutz aufweist. Ein weiterer Vorteil ergibt sich, wenn die Antenne im Wartungsfall demontiert werden soll. Hierzu ist es einfach erforderlich die Antenne herauszuziehen und durch eine Einzugsfeder kann diese danach wieder in den nichtmetallischen Schlauch eingezogen werden. Der Schlauch ist bevorzugt aus Kunststoff, Carbon oder Glasfaserrohren gefertigt. Besonders in Stranggusssegmenten sind die Anforderungen aufgrund von der Wärmestrahlung höher.

Eine besonders bevorzugte Ausführungsform sieht vor, dass der nichtmetallische Schlauch kühlendes Medium aufweist, bevorzugt weist der Schlauch einen Zufluss und einen Abfluss für kühlendes Medium auf. Bei Anwendungen in denen sehr hohe Temperaturen herrschen, wie beispielsweise bei einer Stranggussanlage soll die Antenne gekühlt werden. Dies geschieht besonders vorteilhaft dadurch, dass der nichtmetallische Schlauch mittels kühlenden Mediums durchflossen ist. Der Schlauch also an dem einen Ende einen Eingang für das kühlende Medium und am anderen Ende einen Ausgang für dieses kühlende Medium aufweist. Als kühlendes Medium kommt beispielsweise Wasser oder Kühlluft zum Einsatz.

Eine weitere vorteilhafte Ausführung sieht vor, dass der Schlauch zumindest einen eigenen Kühlkanal aufweist, welcher entlang der Antenne angeordnet ist. Eine mögliche Ausführung ist, dass der Schlauch aus einem Doppelwandigen Schlauch besteht, wobei im Inneren die Antenne eingezogen ist und zwischen Außenwand und Innenwand der Kühlkanal angeordnet ist. Eine andere Ausführung sieht vor, dass eine Vielzahl von Kanälen in der Wand des Schlauches vorhanden sind oder im Schlauch um die Antenne mehrere Rohre angeordnet sind, welche von einem Kühlmedium durchströmt werden können.

Erfindungsgemäß verändert ein von der Kabelantenne empfangener Informationsgehalt des jeweiligen Transponders sich während der Rotationsbewegung oder der translatorischen Bewegung nicht - die Information ist dieselbe. Die vom jeweiligen Transponder ausgelesene Information bleibt während der Rotationsbewegung oder der translatorischen Bewegung unverändert. Es wird also keine Information - während der Rotationsbewegung oder der translatorischen Bewegung - von einem anderen Sensor auf den Transponder geschrieben. Die ausgelesene Information ist beispielsweise ein Identifikationscode, eine Identifikationsnummer, Anlagenspezifische Angaben und/oder Bauteilangaben.

Die erfindungsgemäße Aufgabe wird auch durch das eingangs genannte Verfahren gelöst, welches folgendes umfasst:
- eine Kabelantenne, und fünf passive Transponder, bevorzugt RFID Transponder, wobei zumindest ein passiver Transponder an jedem der Körper angebracht ist,
   - wobei der passive Transponder derart positioniert ist, dass sich während der Rotationsbewegung oder der translatorischen Bewegung des Körpers eine Position von Transponder und Kabelantenne verändert,
   - eine Auswerteeinrichtung ist mit der Kabelantenne verbunden und bestimmt aufgrund eines von der Kabelantenne erfassten Transpondersignals die Rotationsbewegung oder die translatorische Bewegung,
   - wobei die Auswerteeinrichtung für alle fünf Körper eine Abweichung von der Rotationsbewegung oder translatorischen Bewegung zu der vorgegebenen Rotationsbewegung oder translatorischen Bewegung fortlaufend, bevorzugt in Echtzeit, erkennen kann.

Die Kabelantenne und der Transponder müssen während der Bewegung des Körpers eine Relativbewegung ausführen. Dies ermöglicht es der Auswerteeinrichtung aufgrund des empfangenen Signals einen Rückschluss auf die Bewegung zu treffen. Die Überwachung der Bewegung ist im einfachsten Fall das Feststellen ob der Körper eine Bewegung ausführt. Die Auswerteeinrichtung bestimmt die Bewegung aufgrund eines oder mehrerer Parameter des Signales, wie bereits zuvor bei der Vorrichtung ausgeführt.

Eine zweckmäßige Ausführungsform sieht vor, dass der Transponder oder die Antenne derart am Körper positioniert sind, dass während der Bewegung des Körpers das von der Antenne empfangene Signal des Transponders sich in seiner Signalstärke verändert, oder es treten während der Bewegung des Körpers Positionen auf, in welchen kein Signal empfangen wird.

Durch die Betrachtung der Signalstärke kann sehr zuverlässig auf die Bewegung geschlossen werden. Bei Körpern für welche hauptsächlich das Vorhandensein irgendeiner Bewegung wichtig ist, hat sich auch die Methode Signal vorhanden und Signal nicht vorhanden als praktikabel erwiesen. Hierbei ist aber wichtig, dass sichergestellt ist, dass auch wirklich immer eine Position auftritt, in welcher die Antenne kein Signal empfangen kann.

Eine bevorzugte Ausführungsform sieht vor, dass von der Auswerteeinrichtung zumindest ein charakteristischer Parameter der Bewegung, bevorzugt eine Geschwindigkeit, ein Erreichen einer Endposition und/oder eine Drehzahl, bestimmt werden kann. Die Auswerteeinrichtung ist so ausgestaltet, dass sie aufgrund des empfangenen Signals einen Rückschluss auf die Bewegung des Körpers machen kann. Dies kann beispielsweise dann der Fall sein, wenn es während der Bewegung Phasen gibt, in denen ein Transpondersignal empfangen wird und Phasen, in welchen keine Signal vom Transponder empfangen wird. Diese Information lässt einen Rückschluss auf eine Drehzahl zu - falls die Bewegung eine Rotationsbewegung ist. Dies kann auch bei Körpern welche Linearbewegungen ausführen in ähnlicher Weise erfolgen. Es ist auch denkbar, dass der Rückschluss auf einen Parameter der Bewegung aufgrund der Signalstärke erfolgt.

Eine vorteilhafte Ausführung sieht vor, dass die Antenne von einem Kühlmedium gekühlt wird. Dies ist besonders bei Anwendungen in einer rauen und heißen Umgebung sehr wichtig. Die Antenne zu kühlen ist besonders beim Überwachen von rotierenden Rollen in Segmenten einer Strangussanlage wichtig, um die Funktionalität der Überwachung über einen längeren Zeitraum sicherzustellen.

Erfindungsgemäß verändert ein von der Kabelantenne empfangener Informationsgehalt des jeweiligen Transponders sich während der Rotationsbewegung oder der translatorischen Bewegung nicht - die Information bleibt dieselbe.

Die Aufgabe wird durch die eingangs genannte Verwendung der Vorrichtung gelöst. Diese Vorrichtung eignet sich besonders für eine Stranggussanlage zum Überwachen der Bewegung von drehenden Rollen oder für eine Förderbandanlage zur Überwachung von Tragrollen. Für solche Anlagen eignet sich die beschriebene Vorrichtung besonders vorteilhaft, da in solchen Anlagen eine Vielzahl von bewegbaren Körpern vorhanden sind. Die Überwachung ist durch diese Vorrichtung besonders einfach und kostengünstig.

Die Aufgabe wird weiterhin durch ein Computerprogramm umfassend Befehle, die bewirken, dass die zuvor beschriebene Vorrichtung zur Überwachung von Anlagen die oben erläuterten Verfahrensschritte ausführt. Dieses Computerprogramm ist beispielsweise auf einem Computerlesbaren Medium gespeichert.

### Kurze Beschreibung der Zeichnungen

Fig. 1a und 1b zeigen eine schematische Darstellung der Vorrichtung.
Fig. 2 zeigt eine bevorzugte Ausführungsform der erfindungsgemäßen Vorrichtung.
Fig. 3 zeigt eine Stranggussanlange mit der erfindungsgemäßen Vorrichtung.
Fig. 4a und Fig. 4b zeigt eine bevorzugte Anordnung von einem Transponder an einem beweglichen Körper.
Fig. 5 zeigt eine weitere vorteilhafte Ausführungsform der erfindungsgemäßen Vorrichtung.
Fig. 6a-6c zeigt ein vereinfachtes Signal, welches von einer Antenne empfangen wird.

### Beschreibung der Ausführungsformen

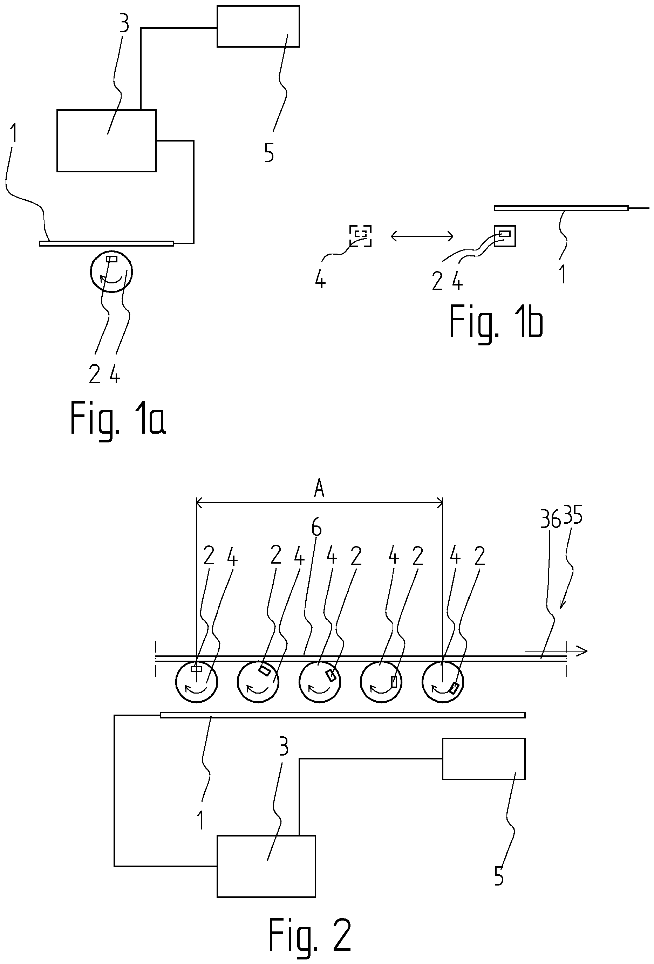

In Fig. 1a ist auf einem beweglichen Körper 4 ein Transponder 2 angeordnet. Eine Kabelantenne 1 empfängt ein Signal des Transponders 2, welches von der Auswerteeinrichtung 3 empfangen und ausgewertet wird. Das Ergebnis wird an einem Anzeigegerät 5 angezeigt. Die Auswerteeinrichtung 3 kann das Ergebnis aber auch an ein übergeordnetes Leitsystem einer Industrieanlage übermitteln.

In Fig. 1b ist ein beweglicher Körper 4 mit einem Transponder 2 dargestellt, welcher eine lineare Bewegung ausführt. Der Körper 4 soll eine Endlage oder zumindest einen vordefinierten Bereich erreichen - dargestellt durch den Körper 4 mit durchgezogener Linie. Die Kabelantenne 1 kann den Transponder 2 in dieser Endlage oder diesem Bereich detektieren. Der bewegliche Körper 4 bewegt sich also zwischen dem strichlierten Körper 4 und dem mit einer durchgezogenen Linie dargestellten Körper 4.

In Fig. 2 ist beispielhaft ein Abschnitt eines Förderbandes 35 dargestellt. Das Förderband 35 besteht aus einer Vielzahl von Körpern 4 - konkret sind dies Tragrollen - und einem Fördergurt 36. Diese Körper 4 führen eine ständige Rotationsbewegung aus. Diese Körper haben zueinander einen bestimmten Abstand. Jene beiden zu überwachenden Körper, welche den größten Abstand zueinander aufweisen, haben einen Abstand A. Dieser Abstand A kann beispielsweise zumindest fünf Meter oder zumindest 20 Meter betragen. Es können natürlich auch zumindest zwanzig Körper überwacht werden. Wenn einer dieser Körper 4 feststeckt oder sich nicht mehr synchron mit der Geschwindigkeit des Traggurtes bewegt, führt dies zu einem höheren Verschleiß und zu einem erhöhten Energiebedarf. Um Körper 4, welche nicht mehr wie vorgesehen rotieren, zu detektieren werden diese mit einem Transponder 4 ausgestattet. Durch die ortsfeste Kabelantenne 1 wird zumindest von jenen Körpern 4, welche eine Bewegung ausführen ein Signal empfangen. Dieses Signal wird von der Auswerteeinrichtung 3 empfangen und die Bewegung jedes Körpers 4 wird anhand der Transponderdaten ausgewertet. Diese Auswertung wird beispielsweise an ein Anzeigegerät 5 übermittelt. Bei Körpern 4 die keine Bewegung mehr ausführen wird ein konstantes Signal empfangen.

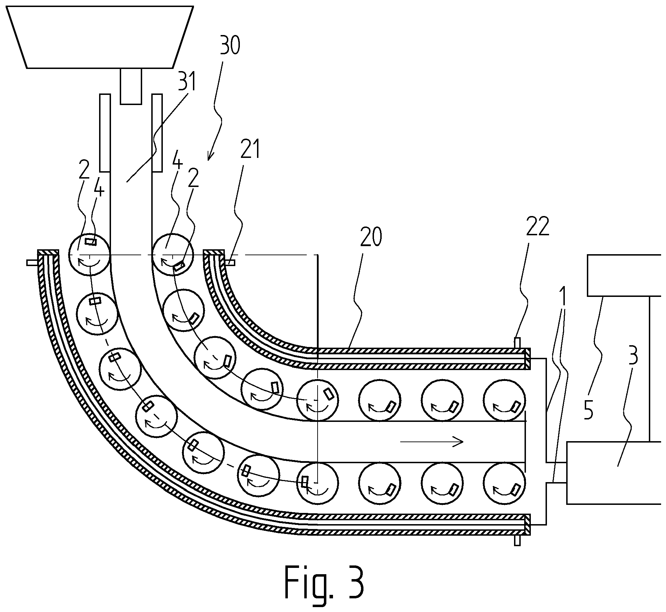

In Fig. 3 ist eine Stranggussanlage 30 dargestellt. Die Stranggussanlage hat eine Vielzahl an beweglichen Körpern 4-konkret Tragrollen - welche mit einem gegossenen Strang 31 mitlaufen und dadurch eine Rotationsbewegung ausführen. Diese Körper 4 sind mit einem Transponder 2 ausgestattet. Eine Kabelantenne 1 detektiert die Signale der Transponder 2. Der Strang 31 wird beidseitig von Tragrollen gestützt. An beiden Seiten sind Kabelantennen 1 angeordnet. Diese Kabelantennen 1 werden von einem Schlauch 20 umhüllt. Dieser Schlauch 20 ist vorteilhafter Weise von einem Kühlmedium durchflossen, welches durch einen Zufluss für Kühlmedium 21 eingebracht wird und durch einen Abfluss für Kühlmedium 22 wieder abgeführt wird. Die beiden Kabelantennen 1 werden dann an eine Auswerteeinrichtung 3 angeschlossen, welche die Bewegung der einzelnen Körper 4 entsprechend auswerten kann.

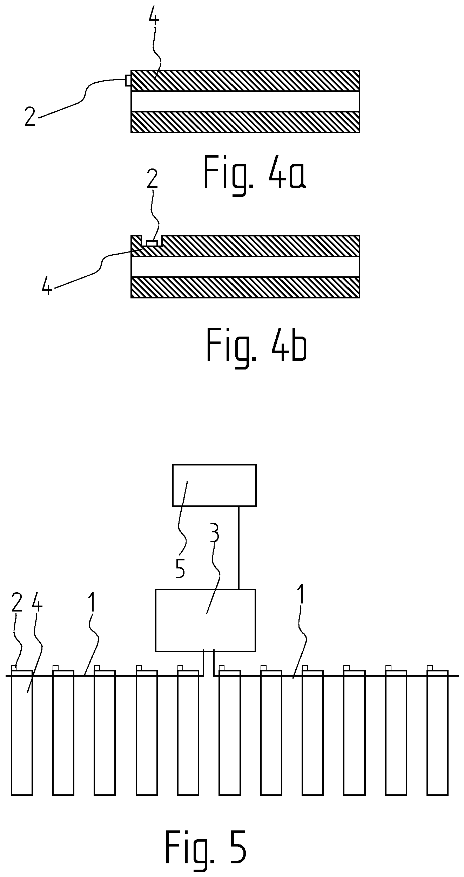

In der Fig. 4a ist ein Körper 4 in der Form einer rotationssymmetrischen Rolle dargestellt. Der Transponder ist vorteilhafterweise an der Stirnseite angebracht, da durch diese Anordnung die exzentrische Anordnung einfach ermöglicht wird. Ein weiterer Vorteil ist, dass auf der Stirnseite einer Rolle im Normalfall keine Kräfte einwirken, welche den Transponder 2 zerstören.

Eine andere Möglichkeit der Anordnung eines Transponders an einem rotationssymmetrischen Körper 4, dass der Transponder umfangseitig in einer Vertiefung angeordnet wird - wie in Fig. 4b dargestellt. Diese Art der Anordnung ergibt ebenfalls eine exzentrische Anordnung und ein entsprechender Schutz ist ebenfalls gewährleistet. Die Vertiefung kann auch zusätzlich noch mit einem Füllmaterial aufgefüllt werden welche eine Detektion des Transponders durch die Kabelantenne nicht verhindert.

In der Fig. 5 ist eine Anordnung von sich drehenden Rollen-beispielsweise ein Rollgang - gezeigt. Bei dieser Anordnung sind zwei Kabelantennen 1 vorhanden. Durch die Verwendung von zwei oder mehr Antennen ist es möglich einen größeren Bereich abzudecken. Die Kabelantennen sind im Normalfall nur für einen bestimmten Längenbereich geeignet. Es können also beispielsweise mit jeder Kabelantenne 1 jeweils zumindest fünf, bevorzugt zumindest zwanzig Körper überwacht werden.

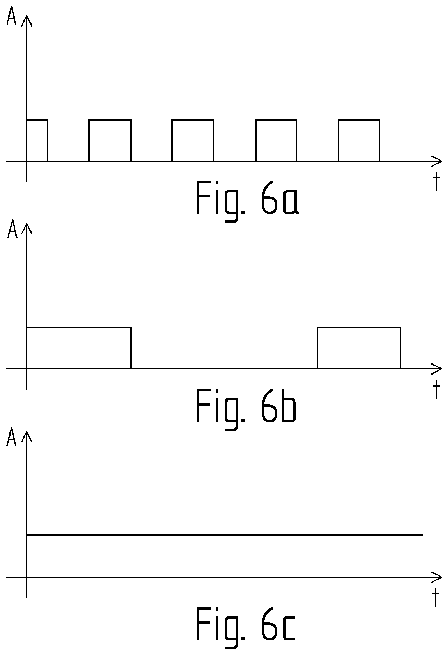

In den Figuren 6a - 6c werden noch beispielhaft Signale, welche von der Auswerteeinrichtung 3 empfangen werden dargestellt. Bei diesen Signalen handelt es sich um die Ausführung, dass es während der Bewegung der Körper 4 Positionen gibt, bei welchen ein Signal detektiert werden kann und Positionen, an denen keine Detektion möglich ist. In der Fig. 6a ist dargestellt, dass sich der Körper wie gewünscht bewegt. In der Fig. 6b bewegt sich der Körper langsamer als gewünscht. Dieser Körper führt also die Bewegung nicht wie gewünscht aus, was durch die längeren Phasen von Transponder Signal erkannt bzw. nicht erkannt zu sehen ist. In der Fig. 6c wird ständig ein Signal detektiert, womit dieser Körper keine Bewegung oder nur eine sehr geringe Bewegung ausführt. Es ist auch denkbar, dass kein Signal erkannt wird - wodurch ebenfalls die Bewegung nicht wie gewünscht ausgeführt wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Kabelantenne
- 2: Transponder
- 3: Auswerteeinrichtung
- 4: Körper
- 5: Anzeigegerät
- 6: Förderband
- 7: Speicher
- 8: Batterie
- 9: Schnittstelle
- 20: Schlauch
- 21: Zulauf für Kühlmedium
- 22: Ablauf für Kühlmedium
- 30: Stranggußanlage
- 31: Strang
- 35: Förderband
- 36: Fördergurt

## Patentansprüche

1. Vorrichtung zur Überwachung einer Anlage, bevorzugt eine Industrieanlage, wobei zumindest fünf Körper (4), bevorzugt zumindest zwanzig Körper(4), welche mit der Anlage verbunden sind, eine vorgegebene Rotationsbewegung oder eine vorgegebene translatorische Bewegung, besonders bevorzugt eine periodische Rotationsbewegung oder periodische translatorische Bewegung, ausführen, **dadurch gekennzeichnet, dass**,
- eine Kabelantenne ortsfest angeordnet ist,
- zumindest fünf passive Transponder (2), besonders bevorzugt RFID Transponder, welche von der Kabelantenne (1) detektiert werden können,
- wobei jeder Körper (4) einen Transponder (2) aufweist, welche jeweils derart an einem Körper (4) angebracht sind, dass während einer Rotationsbewegung oder translatorischen Bewegung der Körper sich eine Position der jeweiligen Transponder (2) und der Kabelantenne (1) verändert,
eine Auswerteeinrichtung (3), welche die translatorische Bewegung oder die Rotationsbewegung der zumindest fünf Körpers (4) fortlaufend, anhand von durch die eine Kabelantenne (1) empfangenen Transpondersignalen ermittelt und die Auswerteeinrichtung für alle fünf Körper eine Abweichung von einer Rotationsbewegung oder translatorischen Bewegung zu der vorgegebene Rotationsbewegung oder translatorischen Bewegung fortlaufend, bevorzugt in Echtzeit, erkennen kann, wobei eine ausgelesene Information des jeweiligen Transponders während der Rotationsbewegung oder der translatorischen Bewegung unverändert bleibt.

2. Vorrichtung zur Überwachung einer Anlage nach Anspruch 1, **dadurch gekennzeichnet, dass** der Körper (4) ein Rotationskörper ist und der Transponder (2) exzentrisch an einer Stirnseite des Rotationskörpers oder umfangsseitig am Rotationskörper angebracht ist.

3. Vorrichtung zur Überwachung einer Anlage nach Anspruch 1 - 2, **dadurch gekennzeichnet, dass** der Transponder (2) derart am Körper (4) positioniert ist, dass während der Bewegung des Körpers (4) das von der Kabelantenne (1) empfangene Signal sich in seiner Signalstärke verändert und / oder es treten während der Bewegung des Körpers (4) Positionen auf in welchen kein Signal empfangen wird.

4. Vorrichtung zur Überwachung einer Anlage nach Anspruch 1 - 3, **dadurch gekennzeichnet, dass** die zumindest fünf Körper zueinander einen bestimmten Abstand aufweisen, wobei jene Körper mit dem größten Abstand zueinander zumindest einen Abstand von 5m aufweisen und die Kabelantenne ein Länge von zumindest 5m aufweist.

5. Vorrichtung zur Überwachung einer Anlage nach Anspruch 1 - 4, **dadurch gekennzeichnet, dass** die Auswerteeinrichtung (3) zumindest einen charakteristischen Parameter der Bewegung des Körpers (4), bevorzugt eine Geschwindigkeit, ein Erreichen einer Endposition und/oder eine Drehzahl bestimmen kann.

6. Vorrichtung zur Überwachung einer Anlage nach Anspruch 1 - 5, **dadurch gekennzeichnet, dass** die Kabelantenne (1) von einem nichtmetallischen Schlauch (20) umhüllt wird.

7. Vorrichtung zur Überwachung einer Anlage nach Anspruch 6, **dadurch gekennzeichnet, dass** der nichtmetallische Schlauch ein kühlendes Medium aufweist, bevorzugt weist der Schlauch (20) einen Zulauf (21) und einen Ablauf (22) für Kühlendes Medium auf.

8. Vorrichtung zur Überwachung einer Anlage nach Anspruch 6 oder 7, **dadurch gekennzeichnet, dass** der Schlauch (20) zumindest einen eigenen Kühlkanal aufweist, welcher entlang der Kabelantenne angeordnet ist.

9. Verfahren zur Überwachung einer Anlage, bevorzugt einer Industrieanlage, wobei zumindest fünf Körper (4), bevorzugt zumindest zwanzig Körper (4), der Anlage eine vorgegebene Rotationsbewegung oder eine vorgegebene translatorische Bewegung, bevorzugt eine sich wiederholende Rotationsbewegung oder translatorische Bewegung, besonders bevorzugt eine periodische Rotationsbewegung oder translatorische Bewegung ausführen, **dadurch gekennzeichnet, dass**,
- eine Kabelantenne ortsfest angeordnet ist,
- fünf passive Transponder (2) mithilfe der Kabelantenne ausgelesen werden können, bevorzugt RFID Transponder, wobei zumindest ein passiver Transponder (2) an jedem der fünf Körper (4) angebracht ist,
- wobei der passive Transponder (2) derart positioniert ist, dass sich während der Rotationsbewegung oder der translatorischen Bewegung des Körpers (4) eine Position von Transponder (2) und Kabelantenne (1) verändert, eine Auswerteeinrichtung (3) ist mit der Kabelantenne (1) verbunden und bestimmt aufgrund eines von der Kabelantenne (1) erfassten Transpondersignals die Rotationsbewegung oder die translatorische Bewegung,
- wobei mithilfe einer Auswerteeinrichtung für alle fünf Körper eine Abweichung von der Rotationsbewegung oder translatorischen Bewegung zu der vorgegebenen Rotationsbewegung oder translatorischen Bewegung fortlaufend, bevorzugt in Echtzeit, erkannt wird,
- wobei eine ausgelesene Information des jeweiligen Transponders während der Rotationsbewegung oder der translatorischen Bewegung unverändert bleibt.

10. Verfahren zur Überwachung einer Anlage nach Anspruch 9, **dadurch gekennzeichnet, dass** der Transponder (2) derart am Körper (4) positioniert sind, dass während der Bewegung des Körpers (4) das von der Antenne (1) empfangene Signal des Transponders (2) sich in seiner Signalstärke verändert oder es treten während der Bewegung des Körpers (4) Positionen auf in welchen kein Signal empfangen wird.

11. Verfahren zur Überwachung einer Anlage nach Anspruch 9 - 10, **dadurch gekennzeichnet, dass** die zumindest fünf Körper zueinander einen bestimmten Abstand aufweisen, wobei jene Körper mit dem größten Abstand zueinander zumindest einen Abstand von 5m aufweisen und die Kabelantenne ein Länge von zumindest 5m aufweist.

12. Verfahren zur Überwachung einer Anlage nach Anspruch 9 - 11, **dadurch gekennzeichnet, dass** die Auswerteeinrichtung (3) zumindest einen charakteristischen Parameter der Bewegung, bevorzugt eine Geschwindigkeit, ein Erreichen einer Endposition und/oder eine Drehzahl bestimmen kann.

13. Verfahren zur Überwachung einer Anlage nach Anspruch 9 - 12, **dadurch gekennzeichnet, dass** die Antenne (1) von einem Kühlmedium gekühlt wird.

14. Verwendung der Vorrichtung nach den Ansprüchen 1-8 für eine Stranggussanlage zum Überwachen der Bewegung von drehenden Rollen oder für eine Förderbandanlage zur Überwachung von Tragrollen.

15. Computerprogramm umfassend Befehle, die bewirken, dass die Vorrichtung zur Überwachung einer Anlage nach Anspruch 1- 8 die Verfahrensschritte nach Anspruch 9-14 ausführen.

## Claims

1. Apparatus for monitoring a plant, preferably an industrial plant, wherein at least five bodies (4), preferably at least twenty bodies (4), which are connected to the plant execute a predetermined rotational motion or a predetermined translational motion, particularly preferably a periodic rotational motion or periodic translational motion, **characterized in that**
- a cable antenna is arranged at a fixed location,
- at least five passive transponders (2), particularly preferably RFID transponders, which can be detected by the cable antenna (1),
- wherein each body (4) exhibits a transponder (2), said transponders each being fitted to a body (4) in such a manner that during a rotational motion or translational motion of the bodies a position of the respective transponder (2) and of the cable antenna (1) changes,
an evaluating device (3) which continuously ascertains the translational motion or the rotational motion of the at least five bodies (4) on the basis of transponder signals received by the one cable antenna (1), and the evaluating device can continuously detect, preferably in real time, a deviation of a rotational motion or translational motion relative to the predetermined rotational motion or translational motion for all five bodies, wherein an item of information read out from the respective transponder remains unchanged during the rotational motion or the translational motion.

2. Apparatus for monitoring a plant according to Claim 1, **characterized in that** the body (4) is a body of revolution and the transponder (2) is fitted eccentrically on a front side of the body of revolution or peripherally on the body of revolution.

3. Apparatus for monitoring a plant according to Claims 1-2, **characterized in that** the transponder (2) is positioned on the body (4) in such a manner that the signal received by the cable antenna (1) changes in its signal strength during the motion of the body (4), and/or positions in which no signal is received arise during the motion of the body (4).

4. Apparatus for monitoring a plant according to Claims 1-3, **characterized in that** the at least five bodies have a certain spacing from one another, those bodies with the greatest spacing from one another having a spacing of at least 5 m, and the cable antenna having a length of at least 5 m.

5. Apparatus for monitoring a plant according to Claims 1-4, **characterized in that** the evaluating device (3) can determine at least one characteristic parameter of the motion of the body (4), preferably a velocity, an attaining of a final position, and/or a rotational speed.

6. Apparatus for monitoring a plant according to Claims 1-5, **characterized in that** the cable antenna (1) is encased by a non-metallic hose (20).

7. Apparatus for monitoring a plant according to Claim 6, **characterized in that** the non-metallic hose exhibits a cooling medium, and the hose (20) preferably exhibits an inlet (21) and an outlet (22) for cooling medium.

8. Apparatus for monitoring a plant according to Claim 6 or 7, **characterized in that** the hose (20) exhibits at least one cooling duct of its own, which is arranged along the cable antenna.

9. Method for monitoring a plant, preferably an industrial plant, wherein at least five bodies (4), preferably at least twenty bodies (4), of the plant execute a predetermined rotational motion or a predetermined translational motion, preferably a repeating rotational motion or translational motion, particularly preferably a periodic rotational motion or translational motion, **characterized in that**
- a cable antenna has been arranged at a fixed location,
- five passive transponders (2), preferably RFID transponders, can be read with the aid of the cable antenna, at least one passive transponder (2) having been fitted to each of the five bodies (4),
- wherein the passive transponder (2) has been positioned in such a manner that a position of transponder (2) and cable antenna (1) changes during the rotational motion or the translational motion of the body (4), an evaluating device (3) has been connected to the cable antenna (1) and determines the rotational motion or the translational motion on the basis of a transponder signal registered by the cable antenna (1),
- wherein with the aid of an evaluating device a deviation of the rotational motion or translational motion relative to the predetermined rotational motion or translational motion is detected continuously, preferably in real time, for all five bodies,
- wherein an item of information read out from the respective transponder remains unchanged during the rotational motion or the translational motion.

10. Method for monitoring a plant according to Claim 9, **characterized in that** the transponder (2) has been positioned on the body (4) in such a manner that the signal of the transponder (2), received by the antenna (1), changes in its signal strength during the motion of the body (4), or positions in which no signal is received arise during the motion of the body (4).

11. Method for monitoring a plant according to Claims 9-10, **characterized in that** the at least five bodies have a certain spacing from one another, those bodies with the greatest spacing from one another having a spacing of at least 5 m, and the cable antenna having a length of at least 5 m.

12. Method for monitoring a plant according to Claims 9-11, **characterized in that** the evaluating device (3) can determine at least one characteristic parameter of the motion, preferably a velocity, an attaining of a final position, and/or a rotational speed.

13. Method for monitoring a plant according to Claims 9-12, **characterized in that** the antenna (1) is cooled by a cooling medium.

14. Use of the apparatus according to Claims 1-8 for a continuous-casting plant for the purpose of monitoring the motion of rotating rollers, or for a belt-conveyor plant for the purpose of monitoring carrier rollers.

15. Computer program comprising commands that cause the apparatus for monitoring a plant according to Claims 1-8 to carry out the method steps according to Claims 9-14.

## Revendications

1. Dispositif destiné à la surveillance d'une installation, de préférence une installation industrielle, dans lequel au moins cinq corps (4), de préférence au moins vingt corps (4), qui sont reliés à l'installation, réalisent un mouvement de rotation prédéfini ou un mouvement de translation prédéfini, plus préférablement un mouvement de rotation périodique ou un mouvement de translation périodique, **caractérisé en ce que**
- une antenne à câble est disposée de manière fixe,
- au moins cinq transpondeurs passifs (2), plus préférablement des transpondeurs RFID, qui peuvent être détectés par l'antenne à câble (1),
- dans lequel chaque corps (4) présente un transpondeur (2), qui est installé respectivement au niveau d'un corps (4) de telle sorte que pendant un mouvement de rotation ou un mouvement de translation des corps une position du transpondeur (2) respectif et de l'antenne à câble (1) est modifiée,
un système d'évaluation (3) qui détermine le mouvement de translation ou le mouvement de rotation des au moins cinq corps (4) de manière continue, à l'aide de signaux de transpondeur reçus par le biais de l'une antenne à câble, et le système d'évaluation peut reconnaître pour la totalité des cinq corps un écart d'un mouvement de rotation ou d'un mouvement de translation par rapport au mouvement de rotation ou au mouvement de translation prédéfini de manière continue, de préférence en temps réel, dans lequel une information lue du transpondeur respectif reste inchangée pendant le mouvement de rotation ou le mouvement de translation.

2. Dispositif destiné à la surveillance d'une installation selon la revendication 1, **caractérisé en ce que** le corps (4) est un corps de rotation et le transpondeur (2) est installé de manière excentrée au niveau d'une face avant du corps de rotation ou côté périphérie au niveau du corps de rotation.

3. Dispositif destiné à la surveillance d'une installation selon les revendications 1 et 2, **caractérisé en ce que** le transpondeur (2) est positionné au niveau du corps (4) de telle sorte que pendant le mouvement du corps (4) le signal reçu par l'antenne à câble (1) modifie son intensité de signal et/ou il y a des positions pendant le mouvement du corps (4) sur lesquelles aucun signal n'est reçu.

4. Dispositif destiné à la surveillance d'une installation selon les revendications 1 à 3, **caractérisé en ce que** les au moins cinq corps présentent les uns par rapport aux autres un certain écart, dans lequel les corps avec le plus gros écart les uns par rapport aux autres présentent au moins un écart de 5 m et l'antenne à câble présente une longueur d'au moins 5 m.

5. Dispositif destiné à la surveillance d'une installation selon les revendications 1 à 4, **caractérisé en ce que** le système d'évaluation (3) peut spécifier au moins un paramètre caractéristique du mouvement du corps (4), de préférence une vitesse, le fait d'atteindre une position finale et/ou une vitesse de rotation.

6. Dispositif destiné à la surveillance d'une installation selon les revendications 1 à 5, **caractérisé en ce que** l'antenne à câble (1) est enveloppée par un tuyau non métallique (20).

7. Dispositif destiné à la surveillance d'une installation selon la revendication 6, **caractérisé en ce que** le tuyau non métallique présente un agent de refroidissement, de préférence le tuyau (20) présente une admission (21) et une évacuation (22) pour un agent de refroidissement.

8. Dispositif destiné à la surveillance d'une installation selon la revendication 6 ou 7, **caractérisé en ce que** le tuyau (20) présente au moins un canal de refroidissement qui lui est propre, lequel est disposé le long de l'antenne à câble.

9. Procédé destiné à la surveillance d'une installation, de préférence une installation industrielle, dans lequel au moins cinq corps (4), de préférence au moins vingt corps (4), de l'installation réalisent un mouvement de rotation prédéfini ou un mouvement de translation prédéfini, de préférence un mouvement de rotation ou un mouvement de translation qui se répète, plus préférablement un mouvement de rotation périodique ou un mouvement de translation périodique, **caractérisé en ce que**
- une antenne à câble est disposée de manière fixe,
- cinq transpondeurs passifs (2) peuvent être lus à l'aide de l'antenne à câble, de préférence des transpondeurs RFID, dans lequel au moins un transpondeur passif (2) est installé au niveau de chacun des cinq corps (4),
- dans lequel le transpondeur passif (2) est positionné de telle sorte que pendant le mouvement de rotation ou le mouvement de translation du corps (4) une position du transpondeur (2) respectif et de l'antenne à câble (1) est modifiée, un système d'évaluation (3) est relié à l'antenne à câble (1) et définit en raison d'un signal de transpondeur acquis par l'antenne à câble (1) le mouvement de rotation ou le mouvement de translation,
- dans lequel à l'aide d'un système d'évaluation pour la totalité des cinq corps une différence entre le mouvement de rotation ou le mouvement de translation et le mouvement de rotation ou le mouvement de translation prédéfini est reconnu de manière continue, de préférence en temps réel,
- dans lequel une information lue du transpondeur respectif reste inchangée pendant le mouvement de rotation ou le mouvement de translation.

10. Procédé destiné à la surveillance d'une installation selon la revendication 9, **caractérisé en ce que** le transpondeur (2) est positionné au niveau du corps (4) de telle sorte que pendant le mouvement du corps (4) le signal du transpondeur (2) reçu par l'antenne (1) modifie son intensité de signal et/ou il y a des positions pendant le mouvement du corps (4) sur lesquelles aucun signal n'est reçu.

11. Procédé destiné à la surveillance d'une installation selon les revendications 9 et 10, **caractérisé en ce que** les au moins cinq corps présentent les uns par rapport aux autres un certain écart, dans lequel les corps avec le plus gros écart les uns par rapport aux autres présentent au moins un écart de 5 m et l'antenne à câble présente une longueur d'au moins 5 m.

12. Procédé destiné à la surveillance d'une installation selon les revendications 9 à 11, **caractérisé en ce que** le système d'évaluation (3) peut spécifier au moins un paramètre caractéristique du mouvement, de préférence une vitesse, une atteinte d'une position finale et/ou une vitesse de rotation.

13. Procédé destiné à la surveillance d'une installation selon les revendications 9 à 12, **caractérisé en ce que** l'antenne (1) est refroidie par un agent de refroidissement.

14. Utilisation du dispositif selon les revendications 1 à 8 pour une installation de coulée continue destinée à la surveillance du mouvement de rouleaux rotatifs ou pour une installation à bande transporteuse destinée à la surveillance de rouleaux porteurs.

15. Programme informatique comprenant des instructions qui amènent le dispositif destiné à la surveillance d'une installation selon les revendications 1 à 8 à réaliser les étapes de procédé selon les revendications 9 à 14.
